# EUROPEAN PATENT APPLICATION

(11) **EP 2 897 196 A2**
(43) Date of publication of application: **22.07.2015**
(21) Application number: 13837719.7
(22) Date of filing: 10.09.2013
(51) Int. Cl.: H01M 2/14

(54) **SEPARATOR FOR ELECTRODE ASSEMBLY OF SECONDARY BATTERY AND SECONDARY BATTERY INCLUDING SAME**

(30) Priority: 11.09.2012 KR 20120100331
(71) Applicant: Routejade Inc., Chungcheongnam-do 320-844 (KR)
(72) Inventor: JUNG, Young Ho, Gyeryong-si Chungcheongnam-do 321-763 (KR); KIM, In Joong, Nonsan-si Chungcheongnam-do 320-755 (KR); KIM, Kyung Joon, Incheon 407-070 (KR)
(74) Representative: Von Kreisler Selting Werner - Partnerschaft von Patentanwälten und Rechtsanwälten mbB
(86) International application number: PCT/KR2013/008162
(87) International publication number: WO 2014/042399

(57) **Abstract**

A separator for a secondary battery electrode assembly according to the present invention is positioned between a cathode plate where a cathode terminal is protruded and an anode plate where an anode terminal is protruded and blocks a current flow between the cathode plate and the anode plate, and includes an extension portion which is extended so as to be overlapped with one or more terminals of the cathode terminal and the anode terminal. With a separator filim for a secondary battery and a secondary battery including the same according to the present inventioin, it is possible to prevent a cathode terminal or an anode terminal from being brought into contact with an anode plate or a cathode plate, respectively, even if the cathode plate and the anode plate are slightly dislocated, and it is possible to maximize a battery capacity by minimizing a volume of the separator, and also, it is possible to considerably reduce the possibility of occurrence of a short circuit even if an active material grows according to a chemical reaction.

## Description

### [Technical Field]

The present invention relates to a separator for a secondary battery electrode assembly to be inserted between a cathode plate and an anode plate, and more particularly, to a separator configured to protrude and extend in parts corresponding to a cathode terminal and an anode terminal and a secondary battery including the same.

### [Background Art]

Typically, unlike non-rechargeable primary batteries, secondary batteries can be charged and discharged. Recently, a high power secondary battery with high energy density using a non-aqueous electrolyte solution has been developed. A low capacity battery in which a single battery cell is packaged into a pack shape has been used in small portable electronic devices such as cellular phones, notebook computers, and camcorders, while a high capacity secondary battery in which several tens of battery cells are connected in series or in parallel has been used in devices requiring a high power, for example, a power source for driving motors in an electric automobile.

The secondary batteries have been manufactured in various shapes. Representatively, there is a stack-shaped secondary battery provided with an electrode assembly, in which thin plate-shaped cathode plates and anode plates are alternately laminated or stack and a separator which is an insulator is interposed between a cathode plate and an anode plate, within a case.

Hereinafter, referring to the accompanying drawings, a configuration of a conventional stack-shaped secondary battery will be described in detail.

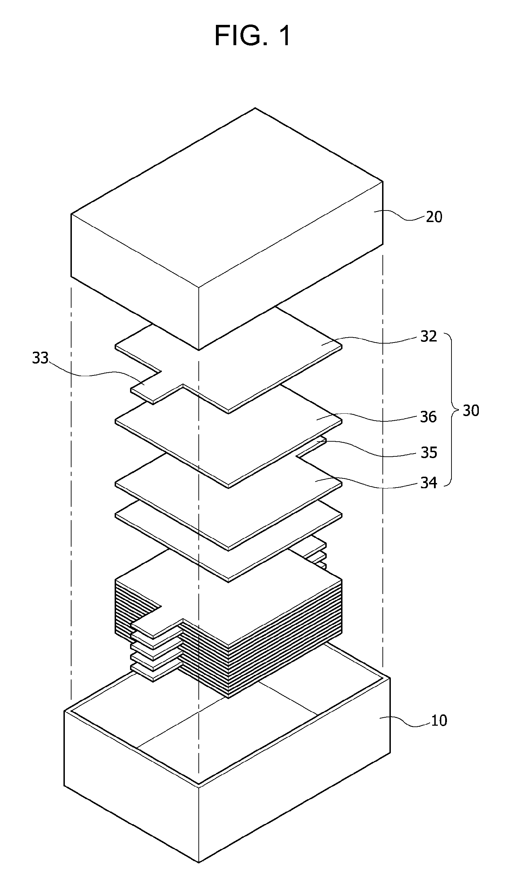

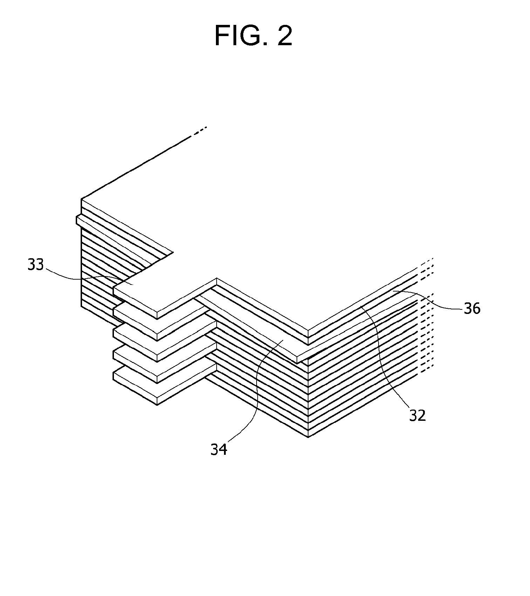

FIG. 1 is an exploded perspective view of a conventional stack-shaped secondary battery, and FIG. 2 is a perspective view of an electrode assembly included in the conventional stack-shaped secondary battery and illustrates that an anode plate is dislocated.

As illustrated in FIG. 1, the conventional stack-shaped secondary battery includes a can 10 in which an electrode assembly 30 is introduced and an inner space is formed to be filled with an electrolyte solution, and a cap 20 configured to prevent the electrolyte solution or a gas generated inside from being discharged to the outside by covering an inlet of the inner space of the can 10 to seal the can 10.

A cathode plate 32 coated with a cathode active material and an anode plate 34 coated with an anode active material are laminated or stacked in sequence with a separator 36 interposed therebetween. At one ends of the cathode plate 32 and the anode plate 34, a cathode terminal 33 and an anode terminal 35 are protruded for electrical connection. Herein, the cathode terminal 33 and the anode terminal 35 are protruded in opposite directions to each other so as not to be overlapped with each other. In case of stacking multiple cathode plates 32 and anode plate 34, the cathode terminals 33 and the anode teraminals 35 are separately laminated or stacked.

Meanwhile, if the cathode plate 32 is brought into direct contact with the anode plate 34, a short circuit occurs. Thus, the separator 36 is inserted between the cathode plate 32 and the anode plate 34. The separator 36 is manufactured into a square shape so as to cover only a portion corresponding to bodies of the catohde plate 32 and the andoe plate 34, and, thus, cannot cover a portion where the cathode terminal 33 and the anode terminal 35 are formed. Therefore, as illustrated in FIG. 2, if the anode plate 34 is slightly dislocated, it is impossible for a body of the cathode plate 32 covered by the separator 36 to be brought into contact with the anode plate 34, but it is possible for the cathode terminal 33 which is not covered by the separator 36 to be brought into contact with the andoe plate 34, and, thus, a short circuit may occur.

### [Disclosure]

### [Technical Problem]

The present invention is suggested to solve the above-described problem, and provides a separator which can prevent a cathode terminal or an anode terminal from being brought into contact with an anode plate or a cathode plate, respectively, even if the cathode plate and the anode plate are slightly dislocated, and a secondary battery including the same.

### [Technical Solution]

According to an exemplary embodiment of the present invention to achieve the above-described object, there is provided a separator for a secondary battery electrode assembly which is positioned between a cathode plate where a cathode terminal is protruded and an anode plate where an anode terminal is protruded and blocks a current flow between the cathode plate and the anode plate, the separator including: an extension portion which is extended so as to be overlapped with one or more terminals of the cathode terminal and the anode terminal.

The extension portion is formed to be shorter in length and wider in width than the overlapped terminal.

A length of the extension portion is set to be 0.2 mm or more to 10 mm or less, and a width of the extension portion is set to be 0.2 mm or more wider than a width of the terminal.

The extension portion includes a first extension portion which is extended along a protruding direction of the cathode terminal and covers one side surface of the cathode terminal in whole or in part, and a second extension portion which is extended along a protruding direction of the anode terminal and covers one side surface of the anode terminal in whole or in part.

The separator is formed into a pocket shape in which any one electrode plate of the cathode plate and the anode plate is inserted into the inside and only a terminal of the electrode plate introduced into the inside is protruded to the outside, and the extension portion is provided in pair so as to be respectively overlapped with both surfaces of the terminal protruded to the outside.

Outer ends except a place where the terminal is protruded to the outside are sealed.

Any one electrode plate of the cathode plate and the anode plate is formed to be matched with a part of outer ends.

The cathode plate and the anode plate are formed into a circular plate shape having one or more linear cut portions, and the cathode terminal and the anode terminal are formed to be protruded from the linear portions, and the separator includes a linear alignment portion to be matched with a linear cut portion of an electrode plate which is laminated or stacked to be overlapped with the other one electrode plate of the cathode plate and the anode plate.

The separator of the present invention includes the cathode plate which is inserted into the inside and is laminated or stacked so as to be overlapped with the anode plate.

The secondary battery of the present invention includes: an electrode assembly including multiple cathode plates and anode plates laminated or stacked alternately and separators respectively configured as described above and positioned between the cathode plates and the anode plates; a can in which the electrode assembly is mounted therein and which is filled with an electrolyte solution; and a cap configured to seal an inlet of the can.

Multiple cathode terminals respectively protruded from the multiple cathode plates are combined into one body so as to be connected to any one of the can and the cap, and multiple anode terminals respectively protruded from the multiple anode plates are combined into one body so as to be connected to the other one of the can and the cap.

The cathode terminals and the anode terminals are spaced apart from each other and extended in the same direction so as not to be overlapped with each other, and the extension portion is extended so as to be overlapped with one or more terminals of the cathode terminals and the anode terminals.

### [Advantageous Effects]

With a separator filim for a secondary battery and a secondary battery including the same according to the present inventioin, it is possible to prevent a cathode terminal or an anode terminal from being brought into contact with an anode plate or a cathode plate, respectively, even if the cathode plate and the anode plate are slightly dislocated, and it is possible to maximize a battery capacity by minimizing a volume of the separator, and also, it is possible to considerably reduce the possibility of occurrence of a short circuit even if an active material grows according to a chemical reaction.

### [Description of Drawings]

FIG. 1 is an exploded perspective view of a conventional stack-shaped secondary battery;
FIG. 2 is a perspective view of an electrode assembly included in the conventional stack-shaped secondary battery and illustrates that an anode plate is dislocated;
FIG. 3 is an exploded perspective view of a secondary battery including a separator according to the present invention;
FIG. 4 is a plane view of the separator according to the present invention;
FIG. 5 is a plane view of an electrode assembly in which an anode plate is dislocated;
FIG. 6 is a use state view of a second exemplary embodiment of the separator of the present invention;
FIG. 7 and FIG. 8 are plane views of electrode assemblies to which the second exemplary embodiment of the separator of the present invention is applied;
FIG. 9 is an exploded perspective view of a secondary battery including a third exemplary embodiment of the separator according to the present invention;
FIG. 10 is a plane view illustrating an arrangement of the third exemplary embodiment of the separator according to the present invention and a cathode plate;
FIG. 11 is an exploded perspective view illustrating a laminated or stacked structure of the third exemplary embodiment of the separator according to the present invention and an anode plate; and
FIG. 12 and FIG. 13 provide an exploded perspective view and a plane view, respectively, illustrating a combination structure of the third exemplary embodiment of the separator according to the present invention.

### [Best Mode]

Hereinafter, exemplary embodiments of a secondary separator and a secondary battery including the same according to the present invention will be described in detail with reference to the accompanying drawings.

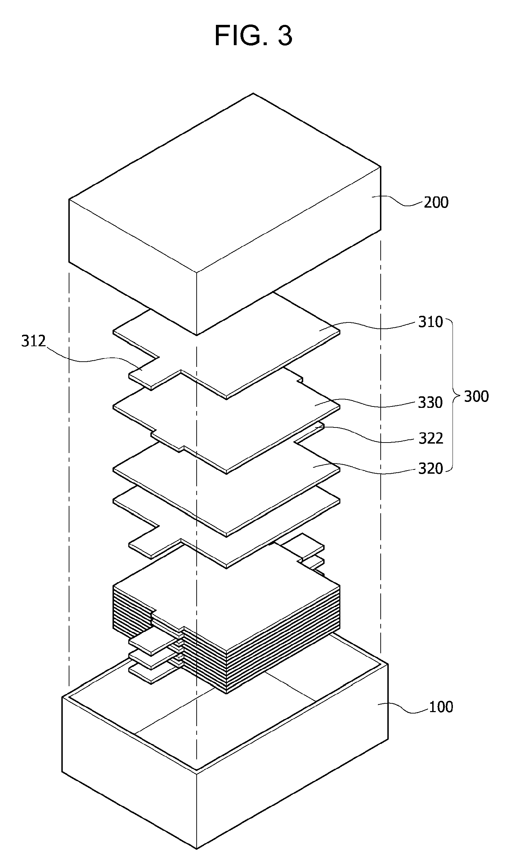

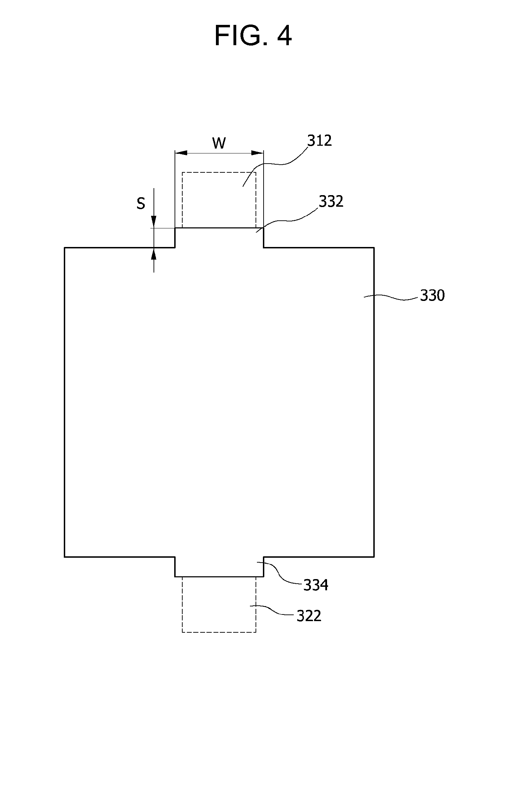

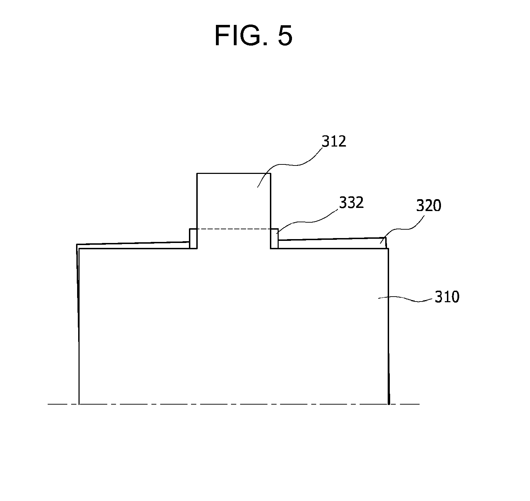

FIG. 3 is an exploded perspective view of a secondary battery including a separator according to the present invention, FIG. 4 is a plane view of the separator according to the present invention, and FIG. 5 is a plane view of an electrode assembly in which an anode plate is dislocated.

A separator 330 according to the present invention is the separator 330 for a secondary electrode assembly 300 which is positioned between a cathode plate 310 and an anode plate 320 and blocks a current flow between the cathode plate 310 and the anode plate 320, and the separator 330 is formed to cover a part of a cathode terminal 312 formed at the cathode plate 310 and an anode terminal 322 formed at the anode plate 320 such that the cathode terminal 312 is not brought into contact with the anode plate 320 or the anode terminal 322 is not brought into contact with the cathode plate 310 even if the cathode plate 310 and the anode plate 320 laminated or stacked alternately are slightly dislocated, which is the most distinguished feature. That is, the separator 330 of the present invention, as illustrated in FIG. 3 and FIG. 4, includes a first extension portion 332 extended so as to be overlapped with the cathode terminal 312 and a second extension portion 334 extended so as to be overlapped with the anode terminal 322. If the separator 330 including the first extension portion 332 and the second extension portion 334 as such is positioned between the cathode plate 310 and the anode plate 320, as illustrated in FIG. 5, even if the anode plate 320 is slightly dislocated to one side so as to be overlapped with the cathode terminal 312, the separator 330 (more clearly, the first extension portion 332) is positioned between the anode plate 320 and the cathode terminal 312, and, thus, a short circuit does not occur.

Meanwhile, if a width of the extension portion 332 is smaller than a width of the cathode terminal 312, when the anode plate 320 is dislocated, it can be brought into contact with the cathode terminal 312. Thus, preferably, a width of the extension portion 332 may be greater than a width of the cathode terminal 312. Herein, if the entire cathode terminal 312 is formed to be covered by the extension portion 332, that is, if the extension portion 332 is formed to be wider in width and longer in length than the cathode terminal 312, it is possible to prevent a short circuit between the cathode plate 310 and the anode plate 320 regardless of a dislocated amount of the anode plate 320. However, if the extension portion 332 is formed to be large as such and completely covers one surface of the cathode terminal 312, it is difficult to combine the multiple extension portions 332 into one body to be electrically conducted, and as a size of the extension portion 332 increases, an exposed area of the cathode terminal 312 decreases and an input of an electrolyte solution decreases, and, thus, a battery capacity may be reduced. Therefore, preferably, the extension portion 332 may be formed to be as small as possible within a range in which the extension portion 332 can cover one surface of the cathode terminal 312 at a position corresponding to the anode plate 320 when the anode plate 320 is dislocated.

Herein, even if the anode plate 320 is moved in a protruding direction of the cathode terminal 312, it does not move as much as a length of the cathode terminal 312. Thus, the extension portion 332 extended from the separator 330 is formed so as to cover both ends in a widthwise direction of the cathode terminal 312 but does not need to be extended to an edge of the cathode terminal 312. That is, preferably, the extension portion 332 may be formed to be shorter in length and wider in width than the overlapped terminal 312.

Meanwhile, if a length of the extension portion 332 is too short, a short circuit occurs when the anode plate is slightly dislocated to one side, and if the a length of the extension portion 332 is too long, a size of the can 100 needs to be increased that much, and, thus, a capacity with respect to the whole size of the secondary battery may be reduced. Further, if a width of the extension portion 332 is formed to be too small, a short circuit may occur. Herein, the cathode plate 310, the anode plate 320, and the separator 330 are fixed to each other with a separate fixing means such as, typically, a tape, and, thus, disarrangement of the cathode plate 310, the anode plate 320, and the separator 330 does not easily occur. Therefore, preferably, a length of the extension portion 332 may be set to be 0.2 mm or more to 10 mm or less, and a width of the extension portion 332 may be set to be 0.2 mm or more wider than a width of the terminal.

If a size of the extension portion 332 is defined as described above, even if the anode plate 320 is slightly dislocated to one side, a short circuit does not occur, and a battery capacity can be maximized by minimizing a size of the extension portion 332. Meanwhile, there has been described only a case where the anode plate 320 is dislocated and brought into contact with the cathode terminal 312, but the cathode plate 310 can be dislocated and brought into contact with the anode terminal 322. Therefore, the extension portion 332 may be divided into the first extension portion 332 configured to cover the cathode terminal 312 and the second extension portion 334 configured to cover the anode terminal 322 as illustrated in the present exemplary embodiment. Also, if only the anode plate 320 may be dislocated, only the first extension portion 332 may be formed, and if only the cathode plate 310 may be dislocated, only the second extension portion 334 may be formed.

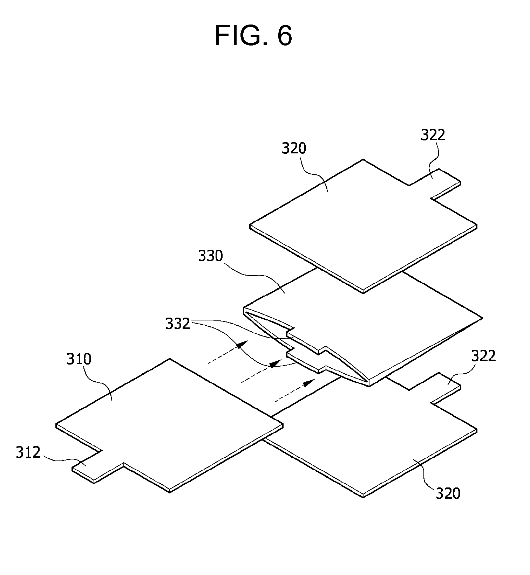

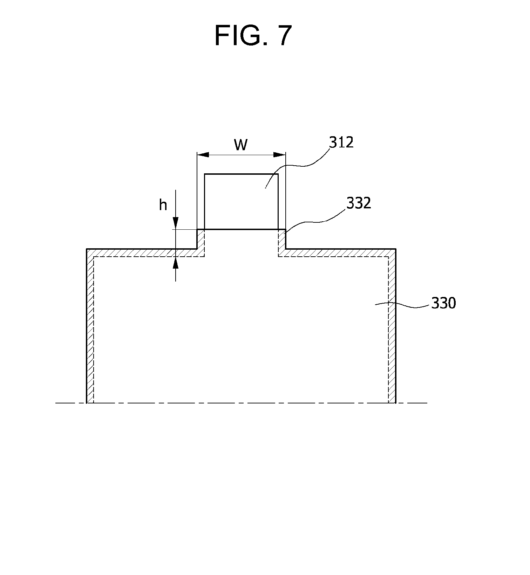

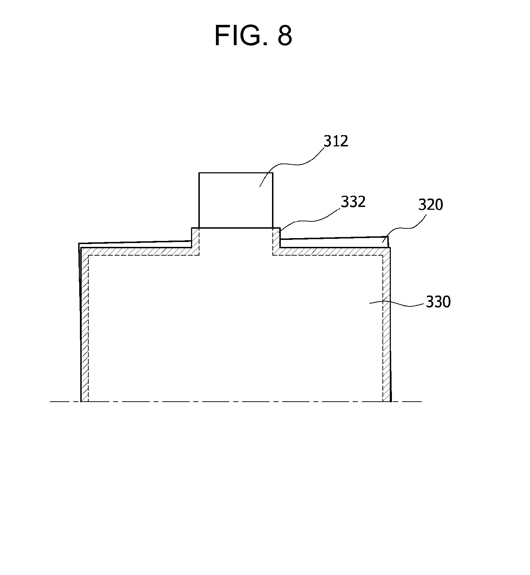

FIG. 6 is a use state view of a second exemplary embodiment of the separator 330 of the present invention; FIG. 7 and FIG. 8 are plane views of electrode assemblies 300 to which the second exemplary embodiment of the separator 330 of the present invention is applied.

The separator 330 configured to electrically isolate the cathode plate 310 and the anode plate 320 may be formed into a single sheet shape, or may be formed into a pocket shape into which the cathode plate 310 or the anode plate 320 can be inserted in order to fix a stacking position of the cathode plate 310 or the anode plate 320 and simplify a stacking process as illustrated in FIG. 3 to FIG. 5. Herein, the anode plate 320 is typically grounded in contact with the can 100 or the cap 200, and, thus, if the separator 330 is formed into a pocket shape, preferably, the cathode plate 310 may be inserted into the separator 330.

Even if the separator 330 is formed into a pocket shape as such, the extension portion 332 may be formed at the separator 330. That is, if the separator 330 is formed into a pocket shape in which only a part of the cathode plate 310 where the cathode terminal 312 is formed is protruded to the outside and the other parts are inserted into the inside, as illustrated in FIG. 6 and FIG. 7, the extension portion 332 may be provided in pair so as to respectively cover both surfaces of the cathode terminal 312. As illustrated in FIG. 3 to FIG. 5, like a case where the extension portion 332 is formed at a single sheet-shaped separator 330, in a case where the extension portion 332 is formed at the pocket-shaped separator 330, preferably, the extension portion 332 may be configured to cover only a part of an inner side (opposite side to the protruding direction) of the cathode terminal 312 rather than the entire cathode terminal 312, and a length of the extension portion 332 may be set to be 0.2 mm or more to 10 mm or less, and a width of the extension portion 332 may be set to be 0.2 mm or more wider than a width of the cathode terminal 312. The reason why a length and a width of the extension portion 332 is restricted as such is the same as that of the first exemplary embodiment of the separator 330 of the present invention, and, thus, the detailed description thereof will be omitted. Therefore, even if the anode plate 320 is dislocated to one side as illustrated in FIG. 8 in a state where the separator 330 including the cathode plate 310 therein and the anode plate 320 are alternately laminated or stacked, the anode plate 320 is brought into contact with only the extension portion 332 but not brought into contact with the cathode terminal 312. Thus, a short circuit does not occur.

Further, if the separator 330 is manufactured to be larger than the anode plate 320, when the separator 330 and the anode plate 320 are alternately laminated or stacked, the center of the separator 330, the center of the cathode plate 310, and the center of the anode plate 320 cannot be accurately matched with one another. Thus, preferably, the separator 330 may be manufactured so as to be matched with the anode plate 320 in outer ends. Among the outer ends of the separator 330, a part where the extension portion 332 is formed and a part corresponding to the anode terminal 322 cannot be matched with the outer ends of the anode plate 320, and, thus, the separator 330 is configured such that the outer ends except the above-described parts can be matched with the outer ends of the anode plate 320.

Meanwhile, as the secondary battery is used, an active material coated on the cathode plate 310 is gradually grown. If the separator 330 is formed into a pocket shape, that is, if the other parts of the outer ends of the separator 330 except the part where the cathode terminal 312 is protruded to the outside are sealed, the growing active material fully fills the inside of the separator 330 and then is discharged to the outside through a part where the cathode plate 310 is protruded. Herein, if the separator 330 does not include the extension portion 332 but includes only an opening where the cathode terminal 312 can be protruded, when any bit of the active material is discharged to the outside of the separator 330, the active material is brought into contact with the anode plate 320, and, thus, the cathode plate 310 and the anode plate 320 are electrically connected with the active material serving as a medium and a short circuit occurs. However, as illustrated in FIG. 6 and FIG. 7, if the extension portion 332 is formed at the part where the cathode terminal 312 is protruded, even when the active material is grown and any bit of the active material is discharged to the outside of the separator 330, the active material is covered by the extension portion 332. Thus, the possibility of occurrence of a short circuit is remarkably reduced.

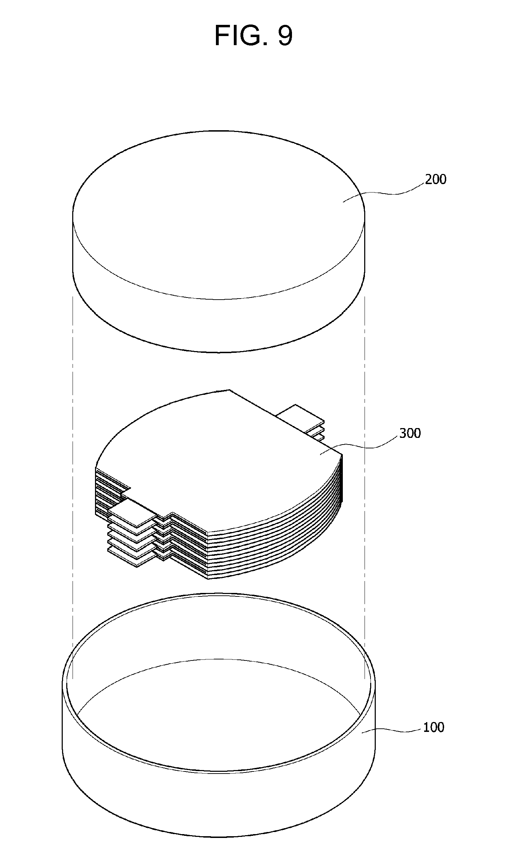

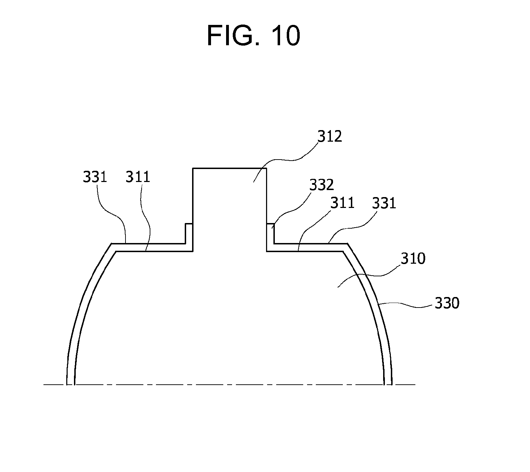

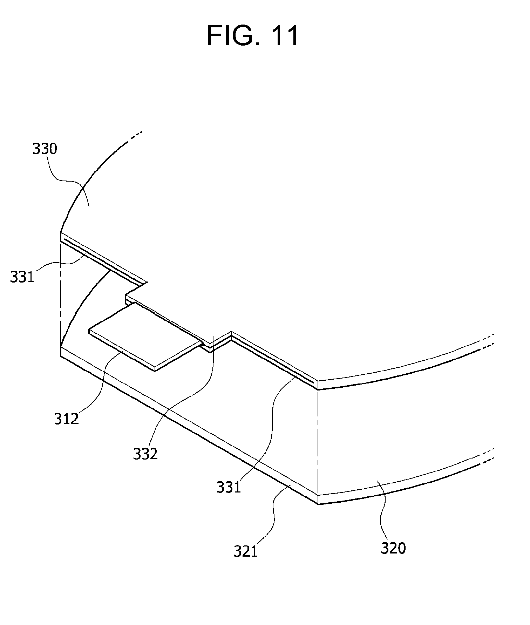

FIG. 9 is an exploded perspective view of a secondary battery including a third exemplary embodiment of the separator 330 according to the present invention, FIG. 10 is a plane view illustrating an arrangement of the third exemplary embodiment of the separator 330 according to the present invention and the cathode plate 310, and FIG. 11 is an exploded perspective view illustrating a laminated or stacked structure of the third exemplary embodiment of the separator 330 according to the present invention and the anode plate 320.

The secondary battery may be manufactured into the hexahedral shape as illustrated in FIG. 1 to FIG. 8, or may be manufactured into a coin shape as illustrated in FIG. 9 and FIG. 10. In this case, if the cathode plate 310 and the anode plate 320 are manufactured into a circular plate shape and the can 100 and the cap 200 are manufactured into a cylinder shape having a slightly greater diameter than the cathode plate 310 and the anode plate 320, a space where the cathode terminal 312 and the anode terminal 322 are respectively protruded from the cathode plate 310 and the anode plate 320 and the multiple cathode terminals 312 are combined into one body and the multiple anode terminals 322 are combined into one body cannot be secured. If the can 100 and the cap 200 are manufactured to be greater than the cathode plate 310 and the anode plate 320, it is possible to secure a space where the cathode terminal 312 and the anode terminal 322 are protruded and combined, but in this case, an inner space of the can 100 and cap 200 includes a large empty space which is not filled with the cathode plate 310 and the anode plate 320. Thus, a battery capacity with respect to a size of the secondary battery can be reduced.

Therefore, if the secondary battery is manufactured into a coin shape, preferably, the cathode plate 310 and the anode plate 320 may be formed into a circular plate shape having one or more linear cut portions 311 and 321, and the cathode terminal 312 and the anode terminal 322 are protruded from the linear portions. Further, as illustrated in the present exemplary embodiment, if the separator 330 is formed into a pocket shape and the cathode plate 310 is inserted into the inside thereof, preferably, the separator 330 may include a linear alignment portion 331 to be matched with the linear cut portion 321 of the anode plate 320 when the separator 330 is laminated or stacked so as to be overlapped with the anode plate 320. If the anode plate 320 and the separator 330 include the linear cut portion 321 and the linear alignment portion 331, respectively, it is possible for an assembler to accurately laminate or stack the anode plate 320 and the separator 330 in a vertical direction just by manipulating the linear cut portion 321 and the linear alignment portion 331 to be matched with each other.

Meanwhile, in the present exemplary embodiment, it has been illustrated that each of the cathode plate 310 and the anode plate 320 includes two linear cut portions 311 and 321, the cathode terminal 312 and the anode terminal 322 are protruded from the linear cut portions 311 and 321 on the opposite sides of the cathode plate 310 and the anode plate 320, but the linear cut portions 311 and 321 may be formed on the same side at the cathode plate 310 and the anode plate 320, respectively. Herein, if the cathode terminal 312 and the anode terminal 322 are protruded from middle portions of the linear cut portions 311 and 321, respectively, the cathode terminal 312 and the anode terminal 322 are overlapped with each other when the cathode plate 310 and the anode plate 320 are laminated or stacked. Thus, the cathode terminal 312 is formed at a part lopsided to any one side of the linear cut portion 311, and the anode terminal 322 is formed at a part lopsided to the other direction of the linear cut portion 321.

Even if the secondary battery is manufactured into a coin shape and the linear alignment portion 331 is formed in front and rear sides of the separator 330 (a protruding direction of the cathode terminal 312 and a protruding direction of the anode terminal 322), preferably, a length of the extension portion 332 may be set to be 0.2 mm or more to 10 mm or less, and a width of the extension portion 332 may be set to be 0.2 mm or more wider than a width of the cathode terminal 312. If the secondary battery is manufactured into a coin shape as such, an effect which can be obtained by additionally forming the extension portion 332 is the same as the effect of the exemplary embodiment illustrated in FIG. 6 to FIG. 8, and, thus, a detailed description thereof will be omitted.

Meanwhile, in the exemplary embodiment, it has been illustrated that when the separator 330 is manufactured into a pocket shape, the cathode plate 310 is inserted into the separator 330, but instead of the cathode plate 310, the anode plate 320 may be inserted into the separator 330. If the anode plate 320 is inserted into the separator 330 as such, the cathode plate 310 needs to be manufactured to have the same size as the separator 330, and the anode plate 320 needs to be manufactured to be slightly smaller than the separator 330. Further, the linear alignment portion 331 of the separator 330 needs to be matched with the linear cut portion 311 of the cathode plate 310.

Meanwhile, the present invention provides the secondary battery configured to include the separator 330 including the extension portion 332 as described above. That is, the secondary battery according to the present invention may be configured to include: the electrode assembly 300 including the multiple cathode plates 310 and anode plates 320 laminated or stacked alternately and separators 330 respectively configured to include the extension portion 332 and positioned between the cathode plates 310 and the anode plates 320; the can 100 in which the electrode assembly 300 is mounted therein and which is filled with an electrolyte solution; and the cap 200 configured to seal an inlet of the can 100. If the electrode assembly 300 in which the multiple cathode plates 310 and the multiple anode plates 320 are laminated or stacked alternately is configured to be mounted within the can 100 and the cap 200, the multiple cathode terminals 312 rectively protruded from the multiple cathode plates 310 may be combined into one body so as to be connected to any one of the can 100 and the cap 200, and the multiple anode terminals 322 respectively protruded from the multiple anode plates 320 may be combined into one body so as to be connected to the other one of the can 100 and the cap 200 such that the can 100 and the cap 200 can serve as power terminals for opposite poles, respectively. In this case, an insulating material needs to be inserted between the can 100 and the cap 200 such that the can 100 and the cap 200 can be electrically isolated.

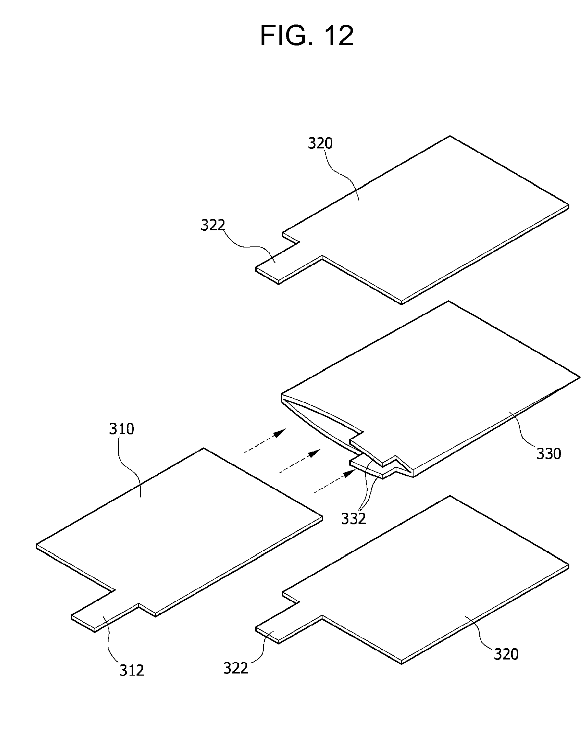

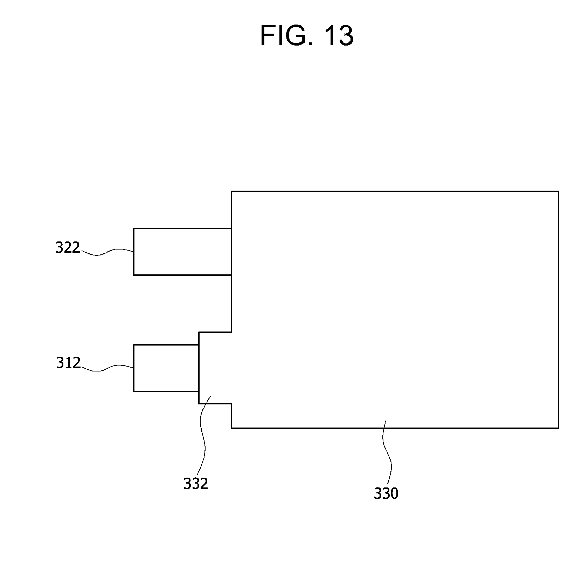

FIG. 12 and FIG. 13 provide an exploded perspective view and a plane view, respectively, illustrating a combination structure of the third exemplary embodiment of the separator according to the present invention.

The cathode terminal 312 and the anode terminal 322 may be configured to be extended in opposite directions to each other as illustrated in FIG. 3 to FIG. 10, or may be extended to be spaced apart from each other with a regular gap in the same direction so as not to be overlapped with each other as illustrated in FIG. 11 and FIG. 12. If the cathode terminal 312 and the anode terminal 322 are extended in the same direction as such, the cathode terminal 312 and the anode terminal 322 cannot be positioned in the middle of the cathode plate 310 and the anode plate 320, respectively, but need to be arranged to be lopsided to the right and left sides. Thus, a position of the extension portion 332 also needs to be adjusted according to a position of the cathode terminal 312.

Meanwhile, even if the If the cathode terminal 312 and the anode terminal 322 are extended in the same direction, the separator 330 may be manufactured into a pocket shape as illustrated in FIG. 12 and FIG. 13, or may be manufactured into a simple sheet shape. Further, the extension portion 332 may be formed so as to be overlapped with both of the cathode terminal 312 and the anode terminal 322, or may be formed so as to be overlapped with only the cathode terminal 312 as illustrated in the present exemplary embodiment.

The exemplary embodiments of the present invention have been described in detail, but the scope of the present invenition is not limited to the specifi exemplary embodiemnts and should be construed based on the appended claims. Further, it should be undertood by those skilled in the art that various modifications and changes can be made wihtout departing from the scope of the present invention.

The present invention can be used for secondary batteries, energy storage systems, or the like.

## Claims

1. A separator for a secondary battery electrode assembly which is positioned between a cathode plate where a cathode terminal is protruded and an anode plate where an anode terminal is protruded and blocks a current flow between the cathode plate and the anode plate, the separator comprising:
an extension portion which is extended so as to be overlapped with one or more terminals of the cathode terminal and the anode terminal.

2. The separator for a secondary battery electrode assembly of claim 1, wherein the extension portion is shorter in length and wider in width than the overlapped terminal.

3. The separator for a secondary battery electrode assembly of claim 2, wherein a length of the extension portion is set to be 0.2 mm or more to 10 mm or less, and a width of the extension portion is set to be 0.2 mm or more wider than a width of the terminal.

4. The separator for a secondary battery electrode assembly of claim 1, wherein the extension portion includes a first extension portion which is extended along a protruding direction of the cathode terminal and covers one side surface of the cathode terminal in whole or in part, and a second extension portion which is extended along a protruding direction of the anode terminal and covers one side surface of the anode terminal in whole or in part.

5. The separator for a secondary battery electrode assembly of claim 1, wherein the separator is formed into a pocket shape in which any one electrode plate of the cathode plate and the anode plate is inserted into the inside and only a terminal of the electrode plate introduced into the inside is protruded to the outside, and the extension portion is provided in pair so as to be respectively overlapped with both surfaces of the terminal protruded to the outside.

6. The separator for a secondary battery electrode assembly of claim 5, wherein outer ends except a place where the terminal is protruded to the outside are sealed.

7. The separator for a secondary battery electrode assembly of claim 5, wherein any one electrode plate of the cathode plate and the anode plate is formed to be matched with a part of outer ends.

8. The separator for a secondary battery electrode assembly of claim 5, wherein the cathode plate and the anode plate are formed into a circular plate shape having one or more linear cut portions, and the cathode terminal and the anode terminal are formed to be protruded from the linear portions, and
the separator includes a linear alignment portion to be matched with a linear cut portion of an electrode plate which is stacked to be overlapped with the other one electrode plate of the cathode plate and the anode plate.

9. The separator for a secondary battery electrode assembly of claim 5, wherein the separator includes the cathode plate which is inserted into the inside and is stacked so as to be overlapped with the anode plate.

10. A secondary battery comprising:
an electrode assembly including multiple cathode plates and anode plates stacked alternately and separators according to any one of claims 1 to 9;
a can in which the electrode assembly is mounted therein and which is filled with an electrolyte solution; and
a cap configured to seal an inlet of the can.

11. The secondary battery of claim 10, wherein multiple cathode terminals respectively protruded from the multiple cathode plates are combined into one body so as to be connected to any one of the can and the cap, and multiple anode terminals respectively protruded from the multiple anode plates are combined into one body so as to be connected to the other one of the can and the cap.

12. The secondary battery of claim 10, wherein the cathode terminals and the anode terminals are spaced apart from each other and extended in the same direction so as not to be overlapped with each other, and
the extension portion is extended so as to be overlapped with one or more terminals of the cathode terminals and the anode terminals.
